# FASCICULE DE BREVET EUROPEEN

(11) **EP 3 263 406 B1**
(45) Date de publication et mention de la délivrance du brevet: **18.12.2019**
(21) Numéro de dépôt: 17175763.6
(22) Date de dépôt: 13.06.2017
(51) Int. Cl.: B60R 1/00

(54) **SYSTÈME D'AIDE À LA CONDUITE POUR UN VÉHICULE, VÉHICULE FERROVIAIRE ET PROCÉDÉ D'UTILISATION ASSOCIÉS**
FAHRERASSISTENZSYSTEM FÜR EIN FAHRZEUG, ENTSPRECHENDES SCHIENENFAHRZEUG UND ENTSPRECHENDES ANWENDUNGSVERFAHREN
DRIVING ASSISTANCE SYSTEM FOR A VEHICLE, RELATED RAILWAY VEHICLE AND USE METHOD

(30) Priorité: 29.06.2016 FR 1656106
(43) Date de publication de la demande: 03.01.2018
(73) Titulaire: ALSTOM Transport Technologies, 93400 Saint-Ouen (FR)
(72) Inventeur: MIGLIANICO, Denis, 75009 PARIS (FR)
(74) Mandataire: Lavoix

(56) Documents cités:
- ES-A1- 2 400 496
- US-A1- 2007 081 262
- US-A1- 2013 235 351

## Description

La présente invention concerne un système d'aide à la conduite pour un véhicule comportant une cabine délimitée par une vitre et au moins un élément structurel adjacent à la vitre, l'élément structurel obstruant une région du champ de vision d'un conducteur du véhicule, le système comprenant :
- une première caméra apte à obtenir des données représentatives de la région obstruée par l'élément structurel,
- une deuxième caméra apte à obtenir des données représentatives de la région obstruée par l'élément structurel,
- un ensemble d'affichage monté sur l'élément structurel et comprenant une surface d'affichage, et
- une unité de traitement connectée à la première caméra, à la deuxième caméra, et à l'ensemble d'affichage, propre à générer l'affichage d'une image à afficher de la région obstruée sur la surface d'affichage.

Un véhicule ferroviaire, tel qu'un tramway ou un train à grande vitesse, comporte une cabine à partir de laquelle un conducteur conduit le véhicule. Une telle cabine comprend typiquement des éléments structurels de part et d'autre d'un pare-brise qui obstruent la vue latérale du conducteur. Ces éléments structurels sont, par exemple, des montants ou des piliers.

La vision latérale du conducteur est un élément clé dans sa conduite, en particulier dans le cas des tramways où le véhicule évolue dans un environnement urbain.

Une solution consiste à positionner des miroirs pour permettre au conducteur de voir la région obstruée. Cependant, les éléments structurels de la cabine continuent de restreindre la visibilité, au détriment de la sécurité du conducteur, des passagers et des passants au voisinage du tramway ou du tram-train.

De plus, les documents ES2400496 et US 2013/0235351 décrivent des exemples de système d'aide à la conduite pour véhicule.

Par ailleurs, GB2417847 décrit un système d'amélioration de la vue du conducteur d'un véhicule automobile, le véhicule comprenant un pare-brise et un montant latéral obstruant la vue du conducteur sur les côtés du pare-brise. Le système comprend alors une caméra extérieure pour chaque montant, une surface d'affichage montée sur le montant et une unité de traitement apte à gérer l'affichage des images de la caméra extérieure sur la surface d'affichage. Cependant, un tel système ne donne pas entièrement satisfaction. Chaque caméra fournit une image propre qui n'est pas forcément en continuité avec la vision extérieure à travers le pare-brise.

Un but de l'invention est donc de fournir un système qui augmente de manière très précise la perception du monde extérieur par un conducteur du véhicule.

A cet effet, l'invention a pour objet un système tel que défini par la revendication indépendante 1.

Des modes particuliers de réalisation sont définis dans les revendications dépendantes.

Enfin, l'invention concerne aussi un procédé tel que défini par la revendication indépendante 12.

L'invention sera mieux comprise à la lecture de la description qui va suivre, donnée uniquement à titre d'exemple et faite en se référant aux dessins annexés, sur lesquels :
- la figure 1 est une vue schématique d'un système d'aide à la conduite selon l'invention ;
- la figure 2 est une vue schématique de dessus de la cabine ;
- la figure 3 est une vue en perspective de l'intérieur de la cabine comportant un système d'aide à la conduite, l'image affichée n'ayant reçu aucun retraitement pour compenser le relief de la surface d'affichage ;
- la figure 4 est une vue en perspective de l'intérieur de la cabine comportant un système d'aide à la conduite, l'image affichée ayant reçu un retraitement pour compenser le relief de la surface d'affichage ;
- la figure 5 est un organigramme d'un procédé d'utilisation d'un système d'aide à la conduite ; et,
- la figure 6 est un schéma illustrant une compensation du défaut de planéité de la surface d'affichage par l'unité de traitement.

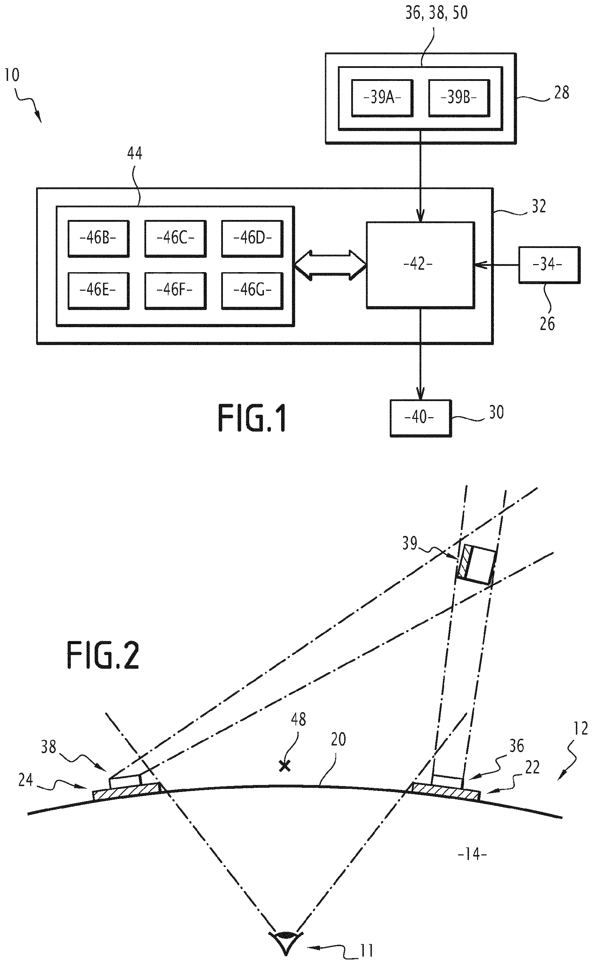

Un système d'aide 10 à la conduite pour un véhicule 12 est illustré sur les figures 1 et 2.

Le véhicule 12 est avantageusement un véhicule ferroviaire tel qu'un tramway, un tram-train ou un train. Il comporte une cabine 14 dans laquelle un conducteur 11 conduit le véhicule 12.

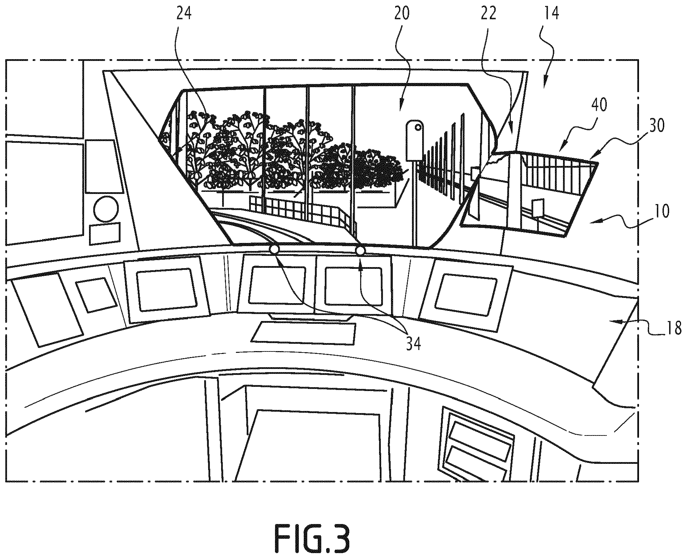

En référence à la figure 3, la cabine 14 comporte un plancher, une interface de conduite 18. Elle est délimitée par une vitre 20 typiquement frontale.

L'interface de conduite 18 permet au conducteur 11 de manœuvrer le véhicule 12 et de recevoir des informations de conduite. La cabine 14 comporte alors par exemple une casquette recouvrant au moins partiellement l'interface de conduite 18 pour la protéger contre les rayons du soleil.

La vitre 20 est disposée à l'avant de la cabine 14. Elle permet au conducteur 11 de voir l'environnement extérieur au véhicule 12, en particulier, à l'avant du véhicule 12, et donc d'adapter sa conduite en fonction de l'environnement extérieur.

La cabine 14 comporte aussi au moins un élément structurel 22 obstruant une région de l'environnement extérieur à la vue du conducteur 11.

Dans le mode de réalisation des figures, la cabine 14 comporte des montants et deux éléments structurels 22 et 24 positionnés de part et d'autre de la vitre 20, qui obstruent deux régions de l'environnement extérieur au véhicule 12. Chaque élément structurel 22, 24 est ici un montant ou un pilier.

Comme illustré sur la figure 1, le système 10 comprend un ensemble 26 d'acquisition de la position et de l'orientation des yeux du conducteur 11, un ensemble de caméras extérieures 28, un ensemble d'affichage 30 monté sur l'élément structurel 22 et une unité 32 de traitement connectée à l'ensemble 26 d'acquisition, à l'ensemble de caméras extérieures 28, et à l'ensemble d'affichage 30.

L'ensemble 26 d'acquisition de la position et de l'orientation des yeux du conducteur 11 comporte avantageusement deux caméras infrarouges 34 disposés symétriquement sur l'interface de conduite 18 au niveau de la casquette ou des montants de la cabine 14. Les deux caméras infrarouges 34 sont aptes à obtenir des données représentatives de l'intérieur de la cabine 14 et en particulier, du visage du conducteur 11.

En référence à la figure 2, l'ensemble de caméras extérieures 28 comporte au moins une première caméra 36 et une deuxième caméra 38. Comme illustré sur la figure 2, la première caméra 36 est positionnée hors de la cabine 14, à l'avant de l'élément structurel 22. La deuxième caméra 38 est positionnée hors de la cabine 14, à l'avant de l'élément structurel 24. Les caméras 36, 38 sont disposées de part et d'autre de la vitre 20.

La première caméra 36 et la deuxième caméra 38 sont aptes à obtenir des données représentatives de l'environnement extérieur situé à l'avant de la cabine 14, et en particulier des images des régions obstruées par les éléments structurels 22 et 24 depuis deux positions différentes.

Ainsi, comme représenté sur la figure 2, la deuxième caméra 38 (respectivement la première caméra 36) est, par exemple, apte à obtenir des données représentatives d'une région 39 de l'environnement extérieur qui n'était pas visible par la première caméra 36 (respectivement la deuxième caméra 38).

La première caméra 36 et la deuxième caméra 38 sont avantageusement positionnées à la même hauteur par rapport au plancher. Cette hauteur est, par exemple, la hauteur par rapport au plancher des yeux d'une personne de taille moyenne en position assise sur un siège de hauteur prédéterminée. Cette hauteur correspond au 50^{ème} percentile de la hauteur par rapport au plancher des yeux des individus d'une population donnée en position assise sur un siège de hauteur prédéterminée. Par exemple, la population donnée est la population française ou la population mondiale.

Elles sont espacées latéralement l'une de l'autre d'une distance supérieure à 0.2 m, notamment comprise entre 0.2 m et 2.0 m.

Comme représenté sur la figure 1, la première caméra 36 et la deuxième caméra 38 présentent des capteurs 39A propres à obtenir des données représentatives de l'environnement extérieur situé à l'avant de la cabine 14 dans l'obscurité, notamment la nuit. Pour cela, la première caméra 36 et la deuxième caméra 38 comprennent par exemple des capteurs infrarouges.

De même, la première caméra 36 et la deuxième caméra 38 comprennent des capteurs 39B propres à obtenir des données représentatives de l'environnement extérieur situé à l'avant de la cabine 14, même lorsque le soleil les éclaire directement.

En référence à la figure 3, l'ensemble d'affichage 30 comporte une surface d'affichage 40. L'ensemble d'affichage 30 est apte à afficher une image de la région obstruée par l'élément structurel 22 sur la surface d'affichage 40. Cette image est qualifiée de « image à afficher » par la suite.

La surface d'affichage 40 épouse la forme de l'élément structurel 22. La surface d'affichage 40 est ainsi montée sur le côté intérieur de l'élément structurel 22 par rapport à la cabine 14. Elle présente ainsi une forme galbée non plane.

La surface d'affichage 40 est, par exemple, définie sur un écran flexible de l'ensemble d'affichage 30, notamment un écran à cristaux liquides de type OLED.

De préférence, l'ensemble d'affichage 30 est propre à afficher des informations relatives à la conduite du véhicule 12 sur la surface d'affichage 40 en superposition de l'image à afficher.

Les informations relatives à la conduite sont des images d'une plateforme extérieure à côté de laquelle le véhicule 12 est à l'arrêt. Ces images proviennent éventuellement d'une caméra extérieure filmant la plateforme extérieure. Dans ce cas, cette caméra extérieure est connectée à la surface d'affichage 40 via l'unité 32 de traitement.

L'unité 32 de traitement comporte un processeur 42 et une mémoire 44. La mémoire 44 contient des applications logicielles 46B à 46G propres à être exécutées par le processeur 42 pour faire fonctionner le système 10.

La mémoire 44 de l'unité 32 de traitement contient ainsi une application logicielle 46B d'acquisition des données provenant des caméras 36, 38, une application logicielle 46C de modélisation tridimensionnelle, à chaque instant, de la région obstruée par l'élément 22, et une application logicielle 46D de détermination, à chaque instant, de la position des yeux du conducteur. La mémoire 44 de l'unité de traitement 32 contient en outre une application logicielle 46E de génération d'une image de la région obstruée en fonction de la position des yeux du conducteur à partir de la modélisation tridimensionnelle, une application logicielle 46F de retraitement de l'image pour compenser le relief de la surface d'affichage 40, et une application d'affichage 46G de l'image retraitée sur la surface d'affichage 40.

En variante non représentée, l'application 46A propre à gérer le fonctionnement du système 10, l'application 46B d'acquisition des données provenant des caméras 36, 38, l'application 46C de modélisation tridimensionnelle, l'application 46D de détermination de la position des yeux du conducteur, l'application 46E de génération d'une image de la région obstruée, l'application 46F de retraitement de l'image et l'application d'affichage 46G sont réalisées chacune sous forme d'un composant logique programmable, tel qu'un FPGA (de l'anglais *Field-Programmable Gate Array*) ; ou encore sous forme d'un circuit intégré dédié, tel qu'un ASIC (de l'anglais *Application-Specific Integrated Circuit*).

L'application logicielle 46C de modélisation tridimensionnelle est propre, à chaque instant, à réaliser une modélisation tridimensionnelle de la région obstruée par l'élément 22 à partir des images de la première caméra 36 et la deuxième caméra 38. Cette modélisation est par exemple obtenue à une fréquence supérieure à 100 Hz, et notamment comprise entre 50 Hz et 200 Hz.

La modélisation tridimensionnelle est construite dans un repère tridimensionnel centré sur un point de référence 48. Par exemple, le point de référence 48 est situé entre la première caméra 36 et la deuxième caméra 38, et est situé, avantageusement, à équidistance de la première caméra 36 et de la deuxième caméra 38.

L'application logicielle 46C de modélisation est propre à mettre en oeuvre un algorithme de type stéréovision, ou « shape-from-silhouette ». Ces algorithmes sont connus de l'état de la technique et ne seront pas décrits par la suite.

L'application logicielle 46D de détermination est propre, à chaque instant, à déterminer la position et l'orientation des yeux du conducteur 11 à partir des données obtenues par les caméras infrarouges 34 de l'ensemble 26 d'acquisition. Plus précisément, l'application logicielle 46D de détermination reçoit les données obtenues par les caméras infrarouges 34 de l'ensemble 26 et met en oeuvre un algorithme de détection de visage à partir de ces données pour obtenir à la fois la position verticale et horizontale de chaque œil et la direction de vision.

L'application logicielle 46E de génération d'image est propre à engendrer, à chaque instant, une image plane représentant la région obstruée dans le prolongement latéral de la vitre 20, du point de vue du conducteur.

Ainsi, l'application logicielle 46E de génération d'image est propre à appliquer une déformation géométrique à la modélisation tridimensionnelle pour en extraire l'image à afficher de la région obstruée.

La déformation géométrique est mise en œuvre en fonction de la position des yeux du conducteur 11. Plus précisément, la déformation géométrique est mise en œuvre en fonction de la position des yeux du conducteur 11 par rapport au point de référence 48.

La déformation géométrique est, par exemple, une rotation de la modélisation tridimensionnelle par rapport à un point donné, par exemple, par rapport au point de référence 48, et/ou une translation de la modélisation tridimensionnelle, et/ou une modification de l'échelle de l'image à afficher pour la voir de plus ou moins près.

L'application logicielle 46E utilise avantageusement une reprojection de pixel.

La surface de l'élément structurel 22 est non plane. Elle présente par exemple un galbe. Etant donné que la surface d'affichage 40 épouse la surface de l'élément structurel 22, l'image à afficher engendrée par l'application logicielle 46E est propre à être retraitée par l'application logicielle 46F de retraitement, pour éviter que du point de vue du conducteur 11, cette image plane soit discontinue par rapport à la vision de l'environnement à travers la vitre 20, comme illustré sur la figure 3.

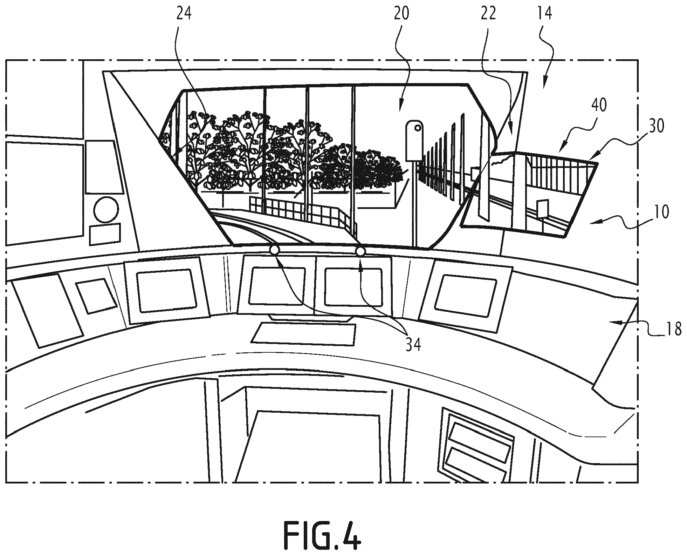

L'application logicielle 46F de retraitement est propre à retraiter l'image à afficher pour compenser le relief de la surface d'affichage 40, afin que l'image à afficher apparaisse plane du point de vue du conducteur 11, comme illustré sur la figure 4, alors qu'elle est engendrée sur une surface d'affichage 40 non plane.

Plus précisément, l'application logicielle 46F de retraitement est propre à découper l'image engendrée par l'application 46E de génération en une pluralité de régions unitaires d'affichage et à découper la surface d'affichage 40 en une pluralité de régions unitaires complémentaires de chaque région unitaire d'affichage, associées chacune à une région unitaire d'affichage de l'image.

Chaque région unitaire d'affichage de l'image engendrée par l'application 46E présente une première forme par exemple une forme rectangulaire, chaque région unitaire complémentaire sur la surface d'affichage 40 présentant une deuxième forme, par exemple une forme de quadrilatère non rectangle.

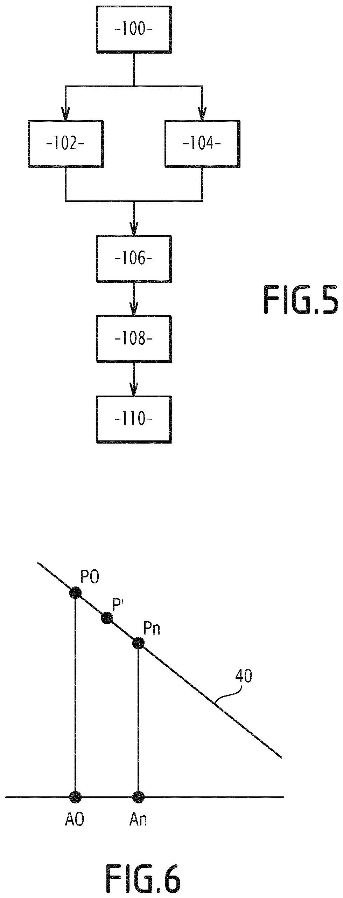

Pour chaque région unitaire complémentaire de la surface d'affichage 40, l'application logicielle 46F de retraitement est apte à déterminer la distance entre les yeux du conducteur 11 et la région unitaire complémentaire considérée de la surface d'affichage 40. En tenant compte de ces distances déterminées, l'application 46F de retraitement est ensuite configurée pour compenser le défaut de planéité de la surface d'affichage 40. Une région unitaire étant considérée comme n segments d'informations (n étant un nombre entier), on considère la projection de chaque segment de la forme rectangulaire sur un point d'un segment de la deuxième forme (par exemple une forme de quadrilatère). Plus précisément, comme illustré sur la figure 6, la projection est déterminée en projetant un point An d'une région unitaire d'affichage sur un point Pn de la deuxième forme. Si des points P' d'une région unitaire de la deuxième forme ne correspondent à aucun point de la région unitaire d'affichage alors la couleur et l'intensité associée à ce point P' sera interpolée à partir de celles des deux points de la deuxième forme adjacents à P'.

L'application logicielle 46F de retraitement est propre à associer chaque région unitaire complémentaire à une région unitaire d'affichage de l'image en compensant la déformation de la surface d'affichage 40. L'application 46F de retraitement est propre à donner à chaque point d'une région unitaire complémentaire la couleur et l'intensité d'un point de la région unitaire correspondante.

Les formes et les dimensions prédéterminées de chaque région unitaire et de chaque région complémentaire associée seront déterminées par la technique du maillage de chaque région.

Un procédé d'aide à la conduite utilisant le système 10 va maintenant être décrit en référence aux figures 3, 4, et 5.

Le procédé, illustré sur la figure 5, comporte une étape 100 d'acquisition de données par les caméras 36, 38, une étape 102 de modélisation tridimensionnelle sur la base des données acquises, une étape 104 de localisation des yeux du conducteur 11 qui peut être réalisée en parallèle de l'étape 102 dans le mode de réalisation de la figure 5, une étape 106 de génération d'image par déformation géométrique en fonction de la position des yeux déterminée, une étape 108 de traitement de l'image à afficher, et une étape d'affichage 110 sur la surface d'affichage 40.

Lors de l'étape 100 d'acquisition, l'application 46B d'acquisition est mise en œuvre par le processeur 42 pour obtenir les données de la première caméra 36 et de la deuxième caméra 38.

Au cours de l'étape 102 de modélisation, l'application 46C de modélisation est mise en œuvre par le processeur 42 pour déterminer la position du point de référence 48 et pour réaliser, à partir des données acquises à l'étape 100 d'acquisition, une modélisation tridimensionnelle de la région obstruée par l'élément structurel 22 dans un repère centré sur le point de référence 48.

A l'étape 104 de localisation, l'application 46D de détermination relève les données obtenues par les caméras infrarouges 34 de l'ensemble 26 d'acquisition et détermine alors la position et l'orientation des yeux du conducteur 11 à partir de ces données.

En particulier, l'application 46D de détermination met en œuvre un algorithme de détection de visage sur les données obtenues par les caméras infrarouges 34 et détermine la position et l'orientation de la tête du conducteur 11 ainsi que la position de ses yeux.

A l'étape 106 de génération d'image, l'application 46E de génération engendre l'image à afficher de la région obstruée par déformation géométrique de la modélisation tridimensionnelle. La déformation géométrique est, par exemple, une des déformations géométriques décrites plus haut.

Au cours de l'étape 108 de traitement de l'image, l'application 46F de retraitement est mise en œuvre par le processeur 42 pour compenser le relief de la surface d'affichage 40. L'application 46F de retraitement détermine pour chaque point de la surface d'affichage 40, la distance entre les yeux du conducteur 11 et le point considéré.

L'application 46F de retraitement est alors mise en œuvre par le processeur 42 pour découper l'image à afficher en régions unitaires d'affichage, par exemple en rectangles et découper la surface d'affichage 40 en régions unitaires correspondantes de formes distinctes, par exemple en quadrilatères non rectangles.

Les dimensions des régions unitaires et des régions unitaires complémentaires dépendent du type de maillage considéré.

Enfin, lors de l'étape d'affichage 110, l'application 46G d'affichage affiche l'image à afficher en affichant pour chaque point d'une région unitaire complémentaire la couleur et l'intensité d'un point de la région unitaire associée à la région unitaire complémentaire. Du point de vue du conducteur 11, l'image à afficher de la région obstruée apparait alors plane et en continuité avec le reste du paysage, comme illustré sur la figure 4.

Dans une variante visible sur la figure 1 selon l'invention, l'ensemble de caméras extérieures 28 comporte une troisième caméra 50.

Avantageusement, la troisième caméra 50 présente un capteur adapté pour obtenir des données dans l'obscurité, notamment la nuit et/ou pour obtenir des données en surexposition, notamment lorsque le soleil l'éclaire directement. La troisième caméra 50 est ainsi, par exemple, un capteur infrarouge apte à obtenir des données dans le domaine de longueur d'ondes supérieur à 800 nm et notamment compris entre 850nm et 940nm.

Dans ce mode de réalisation, la première caméra 36 et la deuxième caméra 38 sont positionnées à une hauteur par rapport au plancher inférieure au 1^{er} percentile de la hauteur par rapport au plancher des yeux des individus d'une population donnée en position assise sur un siège de hauteur prédéterminée. Dans le cas où la population donnée est la population mondiale, cette hauteur est par exemple 1008mm.

La troisième caméra 50 est alors positionnée à une hauteur par rapport au plancher supérieure au 99^{ème} percentile de la hauteur par rapport au plancher des yeux des individus de la population donnée en position assise sur un siège de hauteur prédéterminée. Dans le cas où la population donnée est la population mondiale, cette hauteur est par exemple 1551 mm.

Toutes les tailles des conducteurs et toutes les positions de ces derniers sont ainsi prises en compte par le système.

L'unité de traitement 32, par l'intermédiaire du processeur 42, est alors apte à réaliser la modélisation tridimensionnelle de la région obstruée, à partir des données de la première caméra 36, de la deuxième caméra 38 et de la troisième caméra 50. La modélisation tridimensionnelle est construite dans un repère tridimensionnel centré sur un point de référence 48 situé entre la première caméra 36 et la deuxième caméra 38, ou, en variante, à équidistance de la première caméra 36, de la deuxième caméra 38 et de la troisième caméra 50.

Dans ce mode de réalisation, le procédé d'utilisation du système 10 d'aide à la conduite est sensiblement similaire. En complément, au cours de l'étape 100 d'acquisition de données, l'application 46B d'acquisition est mise en œuvre par le processeur 42 pour obtenir les données de la troisième caméra 50. De plus, lors de l'étape 102 de modélisation, l'application 46C de modélisation est mise en œuvre par le processeur 42 pour déterminer la position du point de référence 48 et pour réaliser, à partir des données acquises à l'étape 100 d'acquisition une modélisation tridimensionnelle de la région obstruée par l'élément structurel 22 dans un repère centré sur le point de référence 48. Cette modélisation tridimensionnelle est donc réalisée à partir des données des trois caméras.

En variante ou en complément, un deuxième ensemble d'affichage (non représenté) est monté sur la surface de l'élément de surface 24. Ce deuxième ensemble d'affichage comporte une deuxième surface d'affichage similaire à la surface d'affichage 40. Le deuxième ensemble d'affichage est alors connecté à l'unité 32 de traitement et est apte à afficher une image de la région obstruée par l'élément structurel 24.

Le procédé d'utilisation du système 10 d'aide à la conduite comporte alors en plus une étape de modélisation similaire à l'étape 102 de modélisation mais appliquée à la région obstruée par l'élément structurel 24, à partir des données de l'étape 100 d'acquisition. Le procédé comporte aussi une étape de déformation géométrique de la modélisation tridimensionnelle de la région obstruée par l'élément 24 pour en extraire l'image à afficher par le deuxième ensemble d'affichage. Le procédé comporte ensuite une étape de traitement de l'image à afficher similaire à l'étape 108 de traitement de l'image. Enfin, le procédé comporte une étape d'affichage similaire à l'étape 110 d'affichage.

Le système d'aide à la conduite décrit élargit ainsi la vision du conducteur 11, notamment la vision latérale du conducteur 11 d'un véhicule de manière simple et précise sans discontinuité latérale entre l'observation réalisée à travers la vitre et l'image affichée sur la surface d'affichage 40.

Ceci augmente notablement et de manière précise la perception de l'environnement extérieur par le conducteur 11 du véhicule.

## Revendications

1. Système d'aide à la conduite (10) pour un véhicule (12) comportant une cabine (14) délimitée par une vitre (20) et au moins un élément structurel (22) adjacent à la vitre (20), l'élément structurel (22) obstruant une région du champ de vision d'un conducteur (11) du véhicule (12), le système (10) comprenant :
- un ensemble de caméras extérieures (28) comportant une première caméra (36) apte à obtenir des données représentatives de la région obstruée par l'élément structurel (22), et une deuxième caméra (38) apte à obtenir des données représentatives de la région obstruée par l'élément structurel (22),
- un ensemble d'affichage (30) monté sur l'élément structurel (22) et comprenant une surface d'affichage (40), et
- une unité de traitement (32) connectée à l'ensemble de caméras extérieures (28), et à l'ensemble d'affichage (30), propre à générer l'affichage d'une image à afficher de la région obstruée sur la surface d'affichage (40),
- un ensemble (26) d'acquisition de la position, ou de la position et de l'orientation, des yeux du conducteur (11) du véhicule (12), l'unité de traitement (32) étant connectée à l'ensemble (26) d'acquisition ;
**caractérisé en ce que** l'ensemble de caméras extérieures (28) comporte une troisième caméra (50) positionnée à une hauteur différente des hauteurs de la première caméra (36) et de la deuxième caméra (38) ;
et **en ce que** l'unité de traitement (32) est propre à réaliser une modélisation tridimensionnelle de la région obstruée à partir des données reçues de la première caméra (36), de la deuxième caméra (38) et de la troisième caméra (50), et à générer une image à afficher de la région obstruée en fonction de la position des yeux du conducteur (11), par déformation géométrique de la modélisation tridimensionnelle, en fonction de la forme de la surface d'affichage (40).

2. Système (10) selon la revendication 1, dans lequel l'unité de traitement (32) est propre à établir la modélisation tridimensionnelle dans un repère utilisant un point de référence (48) situé entre la première caméra (36) et la deuxième caméra (38), ou situé à équidistance de la première caméra (36), de la deuxième caméra (38) et de la troisième caméra (50), l'unité de traitement (32) étant propre à mettre en œuvre la déformation géométrique sur la base de la position des yeux du conducteur (11) par rapport au point de référence (48).

3. Système (10) selon l'une quelconque des revendications précédentes, dans lequel l'unité de traitement (32) est propre à retraiter l'image à afficher pour compenser un relief de la surface d'affichage (40).

4. Système (10) selon la revendication 3, dans lequel l'unité de traitement est propre à retraiter l'image à afficher par découpage de l'image à afficher en une pluralité de régions unitaires d'affichage et par découpage de la surface d'affichage (40) en une pluralité de régions unitaires complémentaires de chaque région unitaire d'affichage, chaque région unitaire d'affichage étant associée à une région unitaire complémentaire, et l'ensemble d'affichage (30) étant propre à afficher pour chaque point d'une région unitaire complémentaire la couleur et l'intensité d'un point de la région unitaire associée à la région unitaire complémentaire.

5. Système (10) selon l'une quelconque des revendications précédentes, dans lequel la première caméra (36) et la deuxième caméra (38) sont situées à la même hauteur.

6. Système (10) selon l'une quelconque des revendications précédentes, dans lequel l'ensemble (26) d'acquisition de la position et de l'orientation des yeux du conducteur (11) comprend au moins une caméra infrarouge (34).

7. Système (10) selon l'une quelconque des revendications précédentes, dans lequel chaque caméra (36, 38, 50) présente un capteur propre à capter des données dans l'obscurité.

8. Système (10) selon l'une quelconque des revendications précédentes, dans lequel l'ensemble d'affichage (30) est propre à afficher des informations relatives à la conduite du véhicule (12).

9. Système (10) selon la revendication 8, dans lequel les informations relatives à la conduite du véhicule comprennent des images d'une plateforme extérieure à côté de laquelle le véhicule (12) est à l'arrêt.

10. Système (10) selon l'une quelconque des revendications précédentes, dans lequel le véhicule comporte un élément structurel (24) additionnel adjacent à la vitre (20) obstruant une autre région du champ de vision du conducteur (11), la première caméra (36) et la deuxième caméra (38) étant positionnées respectivement sur chacun des éléments structurels (22, 24).

11. Véhicule ferroviaire comportant une vitre (20), au moins un élément structurel (22) obstruant une région du champ de vision d'un conducteur (11) du véhicule et un système (10) d'aide à la conduite selon l'une quelconque des revendications précédentes.

12. Procédé d'aide à la conduite dans un véhicule (12) comportant une cabine (14) délimitée par une vitre (20) et au moins un élément structurel (22) adjacent à la vitre (20), l'élément structurel (22) obstruant une région du champ de vision d'un conducteur (11) du véhicule (12), le procédé comportant les étapes suivantes :
- fourniture d'un système selon l'une quelconque des revendications 1 à 10 ;
- acquisition de données par la première caméra (36), par la deuxième caméra (38) et par la troisième caméra (50);
- réalisation d'une modélisation tridimensionnelle de la région obstruée, par l'unité de traitement (32) à partir des données reçues de la première caméra (36), de la deuxième caméra (38) et de la troisième caméra (50) ;
- acquisition de la position des yeux du conducteur (11) ;
- génération d'une image à afficher en fonction de la position des yeux du conducteur (11), par déformation de la modélisation tridimensionnelle en fonction de la forme de la surface d'affichage (40), et ;
- affichage de l'image à afficher sur la surface d'affichage (40) de l'ensemble d'affichage (30).

## Patentansprüche

1. Fahrerunterstützungssystem (10) für ein Fahrzeug (12), umfassend eine Kabine (14), die von einer Scheibe (20) und mindestens einem an die Scheibe (20) angrenzenden Strukturelement (22) abgegrenzt ist, wobei das Strukturelement (22) einen Bereich des Sehfelds eines Fahrers (11) des Fahrzeugs (12) blockiert, wobei das System (10) umfasst:
- eine Anordnung von Außenkameras (28), umfassend eine erste Kamera (36), die zum Erfassen von Daten, die für den vom Strukturelement (22) blockierten Bereich repräsentativ sind, geeignet ist, und eine zweite Kamera (38), die zum Erfassen von Daten, die für den vom Strukturelement (22) blockierten Bereich, geeignet ist,
- eine Anzeigeeinrichtung (30), die auf dem Strukturelement (22) montiert ist und eine Bildschirmoberfläche (40) umfasst, und
- eine Verarbeitungseinheit (32), die an die Anordnung von Außenkameras (28) und die Anzeigeeinrichtung (30) angeschlossen ist und dazu geeignet ist, die Anzeige eines anzuzeigenden Bildes des blockierten Bereichs auf der Bildschirmoberfläche (40) zu erzeugen,
eine Einrichtung (26) zur Erfassung der Lage bzw. der Lage und Ausrichtung der Augen des Fahrers (11) des Fahrzeugs (12), wobei die Verarbeitungseinheit (32) an die Erfassungseinrichtung (26) angeschlossen ist,
**dadurch gekennzeichnet, dass** die Anordnung von Außenkameras (28) eine dritte Kamera (50) umfasst, die auf einer anderen Höhe positioniert ist als die Höhen der ersten Kamera (36) und der zweiten Kamera (38),
und dass die Verarbeitungseinheit (32) dazu geeignet ist, ein dreidimensionales Modell des blockierten Bereichs anhand der von der ersten Kamera (36), der zweiten Kamera (38) und der dritten Kamera (50) empfangenen Daten zu erzeugen und ein anzuzeigendes Bild des blockierten Bereichs als Funktion der Position der Augen des Fahrers (11) durch geometrische Verformung des dreidimensionalen Modells als Funktion der Form der Bildschirmoberfläche (40) zu erzeugen.

2. System (10) nach Anspruch 1, wobei die Verarbeitungseinheit (32) dazu geeignet ist, unter Verwendung eines Bezugspunktes (48), der zwischen der ersten Kamera (36) und der zweiten Kamera (38) angeordnet ist oder in gleichem Abstand zur ersten Kamera (36), der zweiten Kamera (38) und der dritten Kamera (50) angeordnet ist, das dreidimensionale Model in einem Orientierungspunkt zu erstellen, wobei die Verarbeitungseinheit (32) dazu geeignet ist, die geometrische Verformung aufgrund der Lage der Augen des Fahrers (11) in Bezug auf einen Bezugspunkt (48) vorzunehmen.

3. System (10) nach einem der vorstehenden Ansprüche, wobei die Verarbeitungseinheit (32) dazu geeignet ist, das anzuzeigende Bild zu verarbeiten, um eine Erhebung der Bildschirmoberfläche (40) auszugleichen.

4. System (10) nach Anspruch 3, wobei die Verarbeitungseinheit dazu geeignet ist, das anzuzeigende Bild durch Zuschneiden des anzuzeigenden Bildes in mehreren einheitlichen Anzeigebereichen und durch Zuschneiden der Bildschirmoberfläche (40) in mehreren einander ergänzenden einheitlichen Bereichen jedes einheitlichen Anzeigebereichs zu verarbeiten, wobei jeder einheitliche Anzeigebereich einem ergänzenden einheitlichen Bereich zugeordnet ist und die Anzeigeeinrichtung (30) dazu geeignet ist, für jeden Punkt eines ergänzenden einheitlichen Bereichs die Farbe und die Intensität eines dem ergänzenden einheitlichen Bereich zugeordneten einheitlichen Bereichs anzuzeigen.

5. System (10) nach einem der vorstehenden Ansprüche, wobei die erste Kamera (36) und die zweite Kamera (38) auf einer Höhe angeordnet sind.

6. System (10) nach einem der vorstehenden Ansprüche, wobei die Einrichtung (26) zur Erfassung von Lage und Ausrichtung der Augen des Fahrers (11) mindestens eine Infrarotkamera (34) umfasst.

7. System (10) nach einem der vorstehenden Ansprüche, wobei jede Kamera (36, 38, 50) einen Sensor umfasst, der dazu geeignet ist, Daten bei Dunkelheit zu erfassen.

8. System (10) nach einem der vorstehenden Ansprüche, wobei die Anzeigeeinrichtung (30) dazu geeignet ist, Informationen über das Fahren des Fahrzeugs (12) anzuzeigen.

9. System (10) nach Anspruch 8, wobei die Informationen über das Fahren des Fahrzeugs Bilder einer externen Plattform neben der Plattform, auf der das Fahrzeug (12) geparkt ist, umfassen.

10. System (10) nach einem der vorstehenden Ansprüche, wobei das Fahrzeug ein zusätzliches Strukturelement (24) neben der Scheibe (20) umfasst, das einen anderen Bereich des Sehfelds des Fahrers (11) blockiert, wobei die erste Kamera (36) und die zweite Kamera (38) jeweils auf jedem der Strukturelemente (22, 24) positioniert sind.

11. Schienenfahrzeug, umfassend eine Scheibe (20), mindestens ein Strukturelement (22), das einen Bereich des Sehfelds eines Fahrers (11) des Fahrzeugs blockiert, und ein Fahrerunterstützungssystem (10) nach einem der vorstehenden Ansprüche.

12. Verfahren zum Unterstützen eines Fahrers eines Fahrzeugs (12), umfassend eine Kabine (14), die von einer Scheibe (20) und mindestens einem an die Scheibe (20) angrenzenden Strukturelement (22) abgegrenzt ist, wobei das Strukturelement (22) einen Bereich des Sehfelds eines Fahrers (11) des Fahrzeugs (12) blockiert, wobei das Verfahren folgende Schritte umfasst:
- Vorsehen eines Systems nach einem der Ansprüche 1 - 10,
- Erfassen von Daten durch die erste Kamera (36), die zweite Kamera (38) und die dritte Kamera (50),
- Erstellen eines dreidimensionalen Modells des blockierten Bereichs durch die Verarbeitungseinheit (32) anhand der Daten, die von der ersten Kamera (36), der zweiten Kamera (38) und der dritten Kamera (50) empfangen werden,
- Erfassen der Lage der Augen des Fahrers (11),
- Erzeugen eines anzuzeigenden Bildes gemäß der Position der Augen des Fahrers (11) durch Verformung des dreidimensionalen Modells gemäß der Form der Bildschirmoberfläche (40) und
- Anzeigen des anzuzeigenden Bildes auf der Bildschirmoberfläche (40) der Anzeigeeinrichtung (30).

## Claims

1. A driving assistance system (10) for a vehicle (12) including a cab (14) delimited by a window glass (20) and at least one structural element (22) adjacent to the window glass (20), the structural element (22) obstructing a region of the field of view of a driver (11) of the vehicle (12), the system (10) comprising:
- a set of external cameras (28) including a first camera (36) able to obtain data representative of the region obstructed by the structural element (22), and a second camera (38) able to obtain data representative of the region obstructed by the structural camera (22),
- a display assembly (30) mounted on the structural element (22) and comprising a display surface (40), and
- a processing unit (32) connected to the set of external cameras (28), and to the display assembly (30), capable of generating the display of an image to be displayed in the obstructed region on the display surface (40),
- an assembly (26) for acquiring the position, or the position and the orientation, of the eyes of the driver (11) of the vehicle (12), the processing unit (32) being connected to the acquisition assembly (26);
**characterized in that** the set of external cameras (28) includes a third camera (50) positioned at a different height from the heights of the first camera (36) and the second camera (38);
and **in that** the processing unit (32) is able to produce a three-dimensional model of the obstructed region from data received from the first camera (36), the second camera (38) and the third camera (50), and to generate an image to be displayed of the obstructed region as a function of the position of the eyes of the driver (11), by geometric deformation of the three-dimensional model, as a function of the shape of the display surface (40).

2. The system (10) according to claim 1, wherein the processing unit (32) is capable of establishing the three-dimensional model in a coordinate system using a point of reference (48) located between the first camera (36) and the second camera (38), or located equidistantly from the first camera (36), the second camera (38) and the third camera (50), the processing unit (32) being able to implement the geometric deformation based on the position of the eyes of the driver (11) relative to the point of reference (48).

3. The system (10) according to any one of the preceding claims, wherein the processing unit (32) is able to reprocess the image to be displayed in order to compensate for a relief of the display surface (40).

4. The system (10) according to claim 3, wherein the processing unit is capable of reprocessing the image to be displayed by dividing the image to be displayed into a plurality of unitary display regions and by dividing the display surface (40) into a plurality of unitary regions complementary to each unitary display region, each unitary display region being associated with a complementary unitary region, and the display assembly (30) being capable of displaying, for each point of a complementary unitary region, the color and the intensity of a point of the unitary region associated with the complementary unitary region.

5. The system (10) according to any one of the preceding claims, wherein the first camera (36) and the second camera (38) are located at the same height.

6. The system (10) according to any one of the preceding claims, wherein the assembly (26) for acquiring the position and the orientation of the eyes of the driver (11) comprises at least one infrared camera (34).

7. The system (10) according to any one of the preceding claims, wherein each camera (36, 38, 50) has a sensor capable of capturing data in the dark.

8. The system (10) according to any one of the preceding claims, wherein the display assembly (30) is capable of displaying information relative to the driving of the vehicle (12).

9. The system (10) according to claim 8, wherein the information relative to the driving of the vehicle comprises images of an external platform next to which the vehicle (12) is stopped.

10. The system (10) according to any one of the preceding claims, wherein the vehicle includes an additional structural element (24) adjacent to the window glass (20) obstructing another region of the field of view of the driver (11), the first camera (36) and the second camera (38) respectively being positioned on each of the structural elements (22, 24).

11. A rail vehicle including a window glass (20), at least one structural element (22) obstructing a region of the field of view of a driver (11) of the vehicle and a driving assistance system (10) according to any one of the preceding claims.

12. A driving assistance method in a vehicle (12) including a cab (14) delimited by a window glass (20) and at least one structural element (22) adjacent to the window glass (20), the structural element (22) obstructing a region of the field of view of a driver (11) of the vehicle (12), the method including the following steps:
- providing a system according to any one of claims 1 to 10;
- acquiring data via the first camera (36), the second camera (38) and the third camera (50);
- producing a three-dimensional model of the obstructed region, via the processing unit (32), from data received from the first camera (36), the second camera (38) and the third camera (50);
- acquiring the position of the eyes of the driver (11);
- generating an image to be displayed as a function of the position of the eyes of the driver (11), by deformation of the three-dimensional model as a function of the shape of the display surface (40); and
- displaying the image to be displayed on the display surface (40) of the display assembly (30).
